# EUROPEAN PATENT APPLICATION

(11) **EP 4 831 133 A1**
(43) Date of publication of application: **28.10.2026**
(21) Application number: 25171865.6
(22) Date of filing: 23.04.2025
(51) Int. Cl.: C02F 1/34, C02F 1/48, C02F 103/02

(54) **CAVITATION TUBE FOR LIQUID ACTIVATION AND METHOD OF LIQUID ACTIVATION**

(71) Applicant: AISA informacne systemy s.r.o., 821 05 Bratislava (SK)
(72) Inventor: Danek, Miroslav, 821 05 Bratislava (SK)
(74) Representative: inventa Patentova a znamkova kancelaria s.r.o.

(57) **Abstract**

The cavitation tube for liquid activation comprises the interconnecting components: the input chamber (4), the confuser (5), the nozzle chamber (6), the diffuser (7) and the output chamber (8). In doing so, it further comprises at least one antenna (1) connected to the radio frequency generator (2) of electromagnetic waves located in the at least one input chamber (4), the output chamber (8) being arranged in electrically non-conductive housing transparent for electromagnetic waves and in indirect contact with the liquid. In doing so, the nozzle chamber (6) has a smaller effective cross-sectional area than both the input chamber (8) and the output chamber (8). The frequency of the electromagnetic waves of the radio-frequency generator (2) is between 50 MHz and 3 GHz.

## Description

### Technical field

The invention relates to the arrangement of the cavitation tube usable as the liquid activation device based on the principle of magnetic resonance or nuclear magnetic resonance in combination with cavitation, and to the method of liquid activation by this device. The invention falls within the fields of the water, chemical, food, energy, mechanical, agricultural and construction industries.

### Background

The activated water is very sensitive to spatial, technical, human and other factors. Water activation, i.e. activated water, or water structuring, i.e. structured water, have been well known for a very long time. Many methods and technologies for the preparation of activated water, its use and its astonishing effects on plants and animals have been described. It is water treated by electrical discharges that promote some of the natural chemical and physical processes between the water and surrounding air or by the actuation of the magnetic field.

In the state of the art, document CZ 2019-772 A3 is known, wherein the method of purifying liquids by generating an electrically excited discharge of low temperature plasma in a liquid medium is described by the device, wherein cavitation can be achieved when the liquid is flowing by means of a tapering element. The essential feature of the solution is the low-temperature plasma generated to the point of cavitation formation upstream of the liquid flow by means of the excited electrode located coincident with the direction of the liquid flow. The magnitude of the frequency of the high-voltage discharge is in the range up to 20 MHz. However, the method of water treatment described herein addresses only the disinfection of water and is not applicable to its actual activation or modification of its other physical properties.

The actuation of the magnetic field or electromagnetic radiation on the water can affect the water properties, such as boiling point and the amount of dissolved minerals, and can even increase the biological activity of the water and improve its taste and quality.

The above mentioned shortcomings evoked the experts to design more efficient system using micro-cavitation and cavitation to activate the liquids. The design result is the liquid activation cavitation tube and the liquid activation method according to the present invention.

### Summary of the invention

In order to make the activation of the liquid more efficient by its excitation for the formation of micro-cavitation or cavitation, the cavitation tube for the activation of liquids and the method of activating of liquids according to the invention by means of (magnetic) resonance in the liquid environment, in which the formation of micro-cavitation or cavitation can be achieved with suitable flow of the liquid, have been designed.

According to the first aspect of the present invention, there is provided the cavitation tube for liquid activation comprising interconnected components: the input chamber, the confuser, the nozzle chamber, the diffuser, and the output chamber. This basic cavitation tube arrangement includes at least one antenna, wherein each antenna is connected to the radio-frequency electromagnetic wave generator. The location of the antenna, antennas is variable. In one case, the antenna is disposed in the input chamber and the confuser, which extends its free end into the nozzle chamber. In the second case, the antenna is located in the output chamber and diffuser, which extends with its free end into the nozzle chamber. In another case, the antenna is simultaneously disposed in both the input chamber and the output chamber in the manner described above. Each antenna is arranged in electrically non-conductive casing, transparent for electromagnetic waves, and is in indirect contact with the liquid. If only one antenna is disposed in any chamber, it is preferably disposed in the longitudinal direction of the axis of liquid flow through the cavitation tube. If more antennas are placed in the given chamber in order to achieve more homogeneous electromagnetic fields, then the antennas have preferably a deflection away from the longitudinal direction of the axis of liquid flow, thereby achieving their better spatial arrangement.

The frequency of electromagnetic waves of the radio frequency generator is from the interval 50 MHz to 3 GHz. Preferably the radio frequency generator is adapted to generate electromagnetic pulses.

The nozzle chamber has smaller effective cross section than both the input chamber and the output chamber. The narrowing of the effective cross-section can be achieved not only by a narrower tube diameter but also by the insertion of suitably arranged insert inside the nozzle chamber. In such case, the diameter of the cavitation tube according to the first aspect of the present invention may be constant.

In order to increase the efficiency of the cavitation, it is advantageous to include at least one cavitator in the cavitation tube according to the first aspect of the present invention, which can be advantageously positioned in the nozzle chamber. In such arrangement, the influence of the cavitator on the formation of the cavitation is maximized. It is also possible to have the arrangement with the cavitator in the cavitation tube positioned outside the nozzle chamber. The cavitator arrangement allows cavitation to occur in a wide range of flow rates. For the purposes of the present invention, it is necessary to understand that the term "cavitator" is understood to mean the hydrodynamic module comprising one or more bodies of a suitable shape. It is the body whose cross-section gradually increases in size in the direction of flow and is abruptly terminated (for example, it may have a conical shape, or other hydrodynamically suitable shape). Cavitators are thus hydrodynamic bodies which create micro-cavitations in the flowing liquid by pressure shocks. The flowing liquid bypassing the cavitator, increases its rate and immediately behind the body there is a sharp drop in local pressure, which is accompanied by the formation of cavities.

In order to form cavitation for different liquid flow rates, it may be possible to include the injection tube of gas supply, such as air, etc., in the cavitation tube, preferably in the nozzle tube at the input of the diffuser. The gas supply injection tube is positioned so that the gas cloud is formed at the point of pressure drop, and thus at the same point where cavitation occurs. Preferably, for example, oxygen is supplied as the gas if water is treated, since peroxide is then formed and the water is disinfected, thereby preventing, for example, the formation of algae in the circuit. The cavitation tube may advantageously be supplemented by at least one magnetic component attached to the nozzle chamber. The magnetic member may be the permanent magnet or the electromagnet. The magnetic members may be positioned inside the nozzle chamber, or outside the nozzle chamber when they surround the nozzle chamber from the outside. Preferably, the nozzle chamber is positioned within the magnetic field of the permanent magnets or the magnetic field of the electromagnet, which stimulate excitation.

According to the second aspect of the present invention, there is provided the device comprising the plurality of cavitation tubes described above arranged in series, such that the output chamber of the preceding cavitation tube is followed by the input chamber of the following cavitation tube. With high technical effect, three cavitation tubes are arranged in series.

According to the third aspect of the present invention, there is provided the method of activation of liquids performed in at least one cavitation tube according to the first aspect of the present invention, and optionally in the device according to the second aspect of the present invention, by means of magnetic resonance in the flowing liquid, wherein electromagnetic wave energy having the frequency range of 50 MHz to 3 GHz is applied to the flowing liquid in the cavitation tube to produce naturally occurring cavitation in the diffuser, the energy being supplied by at least one antenna immersed in the liquid and fed from the radio-frequency electromagnetic wave generator Advantageously, the flowing liquid in the cavitation tube is subjected to the energy of electromagnetic waves of a pulsed nature. The magnetic resonance of the flowing liquid is performed by the energy of electromagnetic waves acting on the liquid in the area of the input chamber, of the confuser up to the input of the nozzle chamber. Alternatively, the magnetic resonance of the flowing fluid is performed by applying electromagnetic wave energy to the liquid in the area of the output chamber of the diffuser up to the output of the nozzle chamber. The method of liquid activation may be extended so that, in addition to the cavitation naturally occurring in the diffuser by the flowing liquid, the cavitation effect is also applied, achieved by inserting at least one cavitator in the cavitation tube, in particular in the nozzle chamber.

The liquid activation method can be extended in such way that, in addition to the cavitation naturally occurring in the diffuser by the flowing liquid, it can be made more efficient by supplying of gas at least by one injection tube into the nozzle chamber area up to the input of the diffuser, where e.g. air, and in particular oxygen, flows through the injection tube with a high effect. In addition to the magnetic resonance of the flowing liquid, there is also applied the liquid activation effect achieved by the insertion of the stationary magnetic field generated by at least one permanent magnet to the nozzle chamber or by the insertion of the electromagnetic field generated at least by one electromagnet to the nozzle chamber. In doing so, the magnetic/electromagnetic field may be generated inside the nozzle chamber or also from the outside of the nozzle chamber.

The advantages of the cavitation tube for activation of liquids based on the principle of magnetic resonance or nuclear magnetic resonance in combination with cavitation, and of the method of liquid activation by this device according to the invention are evident from its effects, by which it is externally manifested.

Due to the cavitation tube according to the first aspect of the present invention, the device according to the second aspect of the present invention and the method of liquid activation according to the third aspect of the present invention, a higher efficiency is achieved in that by passing the flowing liquid through the cavitation tube, the liquid is subjected to large differences in pressure and flow rate which creates suitable hydrodynamic conditions for excitation. Further, due to cavitation, the wave impedance is changed and the attenuation is reduced and the electromagnetic waves therefore penetrate the cross-section of the chamber with higher power. More molecules in the total volume of water flowing through the chamber absorb the electromagnetic energy of the electromagnetic wave. The similar effect is also achieved at lower flow rates, when there is no cavitation, by injecting air or other gas, e.g. oxygen, through the injection tube into the diffuser, the cloud of mixed water and gas micro-bubbles is created, where the wave impedance also changes and the attenuation is reduced and the electromagnetic wave penetrates the cross-section of the chamber with a higher power output.

It has been shown experimentally that the device formed by the cavitation tube according to the first aspect of the present invention, which is implemented in the hydraulic cooling circuit, reduced the power consumption of the electric motors of the circulation pumps and the fans of the adiabatic cooling tower from 5 to 10% compared to the device which had not the cavitation tube. When three such devices are included in series in the device according to the second aspect of the present invention, more homogeneous electromagnetic fields are created over longer section of the cooling circuit, and in such arrangement, reduction in electrical power consumption approaching 40 % has been measured.

By placing the nozzle chamber of the cavitation tube according to the first aspect of the present invention in the magnetic field, polarization of the flowing liquid occurs and in the real hydraulic circuit by laboratory analyses of the water, several times more substances dissolved in the water were measured from the incrusts, which clogged the inner surfaces of the hydraulic circuit.

### Overview of the figures on the drawings

The cavitation tube for liquid activation, the device and the method for liquid activation according to the first, second and third aspects of the present invention will be further explained in the drawings, in which:
Fig. 1 shows the cavitation tube in excitation mode by means of magnetic resonance in a flowing liquid with natural cavitation.
Fig. 2 shows the cavitation tube with added cavitator.
Fig. 3 shows the cavitation tube with the added gas injection tube for gas injection.
Fig. 4 shows the cavitation tube with the added magnetic field in the nozzle area.
Fig. 5 shows the cavitation tube with two antennas.
Fig. 6 shows the device with two cavitation tubes arranged in series.

### Examples of the embodiments

It is understood that the various embodiments of the invention are presented by way of illustration and not as limitations of the solutions.

### Example 1

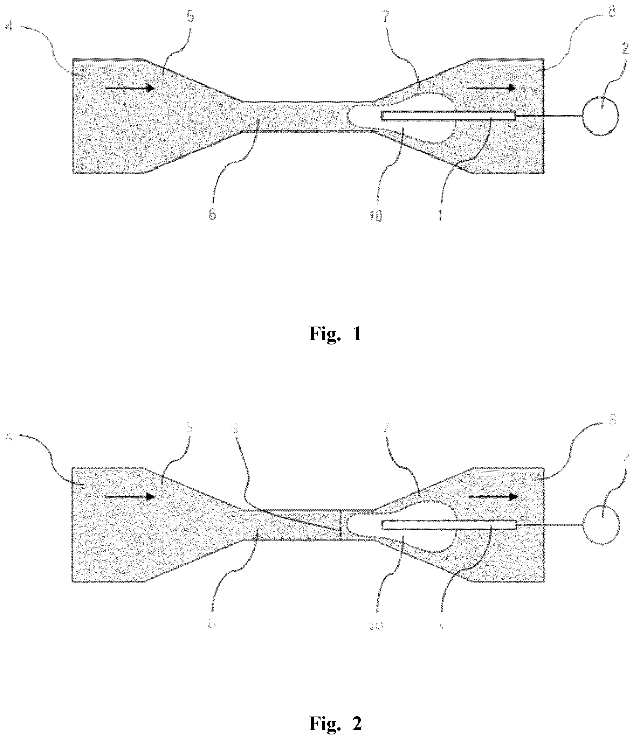

In this example of the specific embodiment, the basic arrangement of the cavitation tube for liquid activation according to the first aspect of the invention is described as illustrated in Fig. 1.

The cavitation tube comprises the interconnecting components: the input chamber 4, the confuser 5, the nozzle chamber 6, the diffuser 7 and the output chamber 8. It further comprises one antenna 1 connected to the radio frequency generator 2 of electromagnetic waves located in the output chamber 8 extending at least into the diffuser 7. The antenna 1 is disposed in the longitudinal direction of the axis of the fluid flow through the cavitation tube. The antenna 1 is arranged in electrically non-conductive housing, transparent to electromagnetic waves, and is in indirect contact with the liquid. The nozzle chamber 6 has a smaller effective cross-section than both the input chamber 4 and the output chamber 8. The cavitation cloud 10 is shown in the diffuser area. The electromagnetic wave frequency of the radio frequency generator 2 is 550 MHz. Alternatively it can be the radio frequency generator 2 which is adapted to generate electromagnetic pulses.

In the alternative embodiment, the improved cavitation tube is supplemented by the cavitator 9 in the area of the nozzle chamber 6 as shown in Fig. 2.

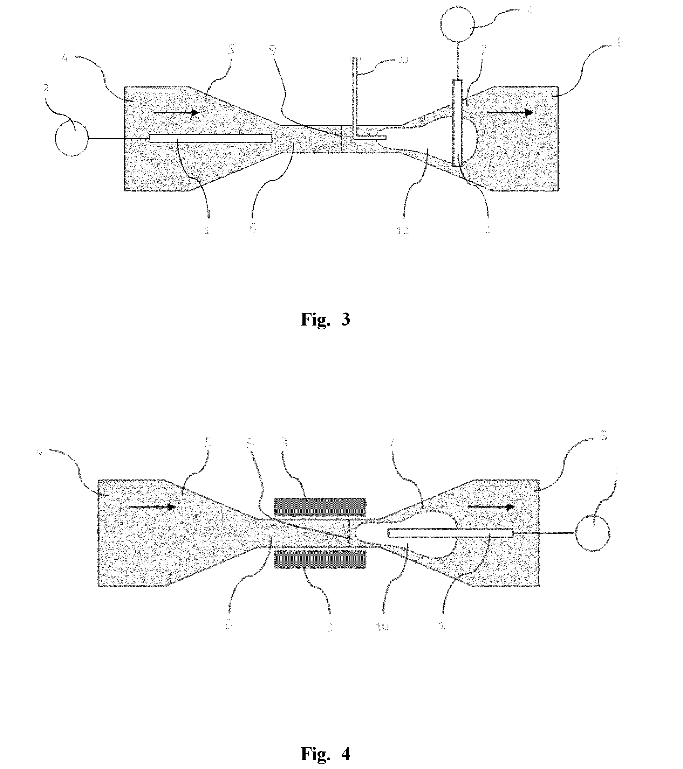

In another alternative embodiment, the improved cavitation tube is supplemented in the area of the nozzle chamber 6 by the cavitator 9 and the magnetic member 3 formed by the permanent magnet positioned on the external side of the nozzle chamber 6 as shown in Fig. 4.

In another alternative embodiment, the improved cavitation tube is supplemented in the area of the nozzle chamber 6 by the cavitator 9 and the injection tube 11 in the nozzle chamber 6 extending up to the input of the diffuser 7. The gas cloud 12 is shown in the area of the diffuser 7. Further, the cavitation tube is completed by one antenna 1 connected to the radio frequency generator 2 of electromagnetic waves located in the input chamber 4 extending into the confuser 5. The antenna 1 is also disposed in the longitudinal direction of the axis of the liquid flow through the cavitation tube. The antenna 1 is also arranged in electrically non-conductive housing, transparent for electromagnetic waves, and is in indirect contact with the liquid as shown in Fig. 3.

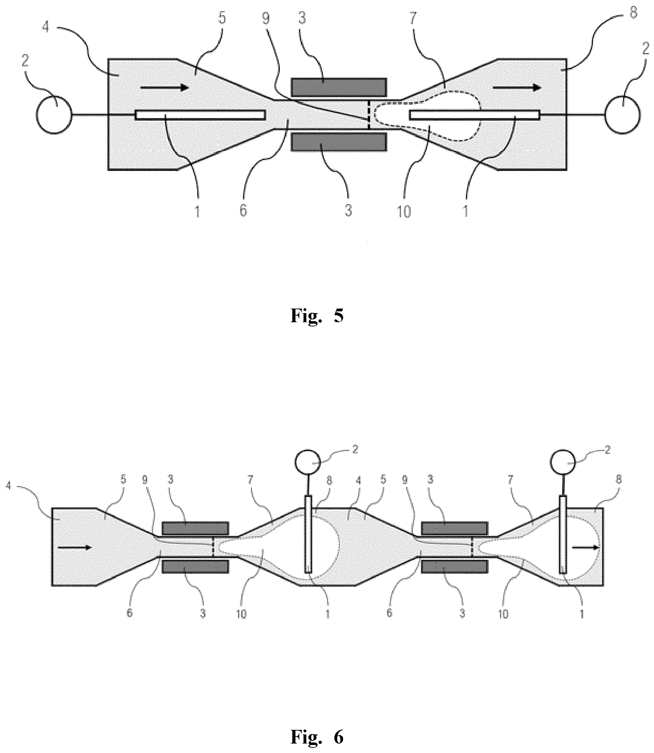

In another alternative embodiment, the improved cavitation tube is supplemented in the area of the nozzle chamber 6 by the cavitator 9 and the magnetic member 3 formed by the permanent magnet disposed on the external side of the nozzle chamber 6. The cavitation cloud 10 is shown in the area of the diffuser 7. Further, the cavitation tube is supplemented by one antenna 1 connected to the radio-frequency generator 2 of electromagnetic waves disposed in the input chamber 4 extending into the confuser 5. Antenna 1 is also positioned in the longitudinal direction of the axis of liquid flow through the cavitation tube. The antenna 1 is also arranged in electrically non-conductive housing, transparent for electromagnetic waves, and it is in indirect contact with the liquid as shown in Fig. 5.

### Example 2

In this example of the specific embodiment, the liquid activation device according to the second aspect of the present invention, shown in Fig. 6, is described, comprising two cavitation tubes arranged in series, shown in Fig. 4, such that the output chamber 8 of the preceding cavitation tube is followed by the input chamber 4 of the following cavitation tube.

The alternative liquid activation device comprises three cavitation tubes arranged in series.

### Example 3

In this example of the specific embodiment, the basic method of liquid activation according to the third aspect of the present invention is described, which is performed in at least one cavitation tube according to the first aspect of the present invention by means of magnetic resonance in the flowing liquid, wherein electromagnetic wave energy at frequency of 1 GHz is applied to the flowing liquid in the cavitation tube to form naturally occurring cavitation in the diffuser 7, which is supplied by at least one antenna 1 immersed in the liquid and fed from the radio-frequency electromagnetic wave generator 2. Alternatively, the energy of electromagnetic waves in the form of pulses acts on the flowing liquid in the cavitation tube. More specifically, the magnetic resonance of the flowing liquid is realized by electromagnetic wave energy acting on the liquid in the area of the input chamber 4, of the confuser 5 up to the input of the nozzle chamber 6 or in the area of the output chamber 8 of the diffuser 7 up to the output of the nozzle chamber 6.

The basic method of liquid activation is evaluated by applying, in addition to the cavitation naturally occurring in the diffuser 7 by the flowing liquid, the cavitation effect achieved by inserting at least one cavitator 9 into the cavitation tube, specifically into the nozzle chamber 6.

Alternatively, the basic liquid activation method is improved so that, in addition to the cavitation naturally occurring in the diffuser 7 by the flowing liquid, the cavitation effect achieved by bringing the gas through one injection tube 11 into the area of the nozzle chamber 6 up to the input of the diffuser 7 is applied, where the gas is oxygen.

It is also possible to provide the method where, in addition to the magnetic resonance of the flowing liquid, the activation effect of the liquid is also applied, achieved by inserting a stationary magnetic field generated by at least one permanent magnet 3 to the nozzle chamber 6 or, alternatively, by inserting the magnetic field generated by at least one electromagnet 3 to the nozzle chamber 6. In doing so, the magnetic/electromagnetic field may be generated inside the nozzle chamber 6 or also from the external side of the nozzle chamber 6.

### Industrial applicability

The cavitation tube for liquid activation and the method for liquid activation according to the invention are useful in hydraulic circuits used for water activation, where the medium is water, or other mixture of water with glycol or with liquid, or with suspension, and in particular in the energy industry, in the chemical industry, in the food industry, in the mechanical engineering industry, in the construction industry, and so on. The invention is useful for increasing energy efficiency, in cooling and heating circuits, in steam generation, steam for steam turbines and also for preventing incrustation in hydraulic circuits without the use of chemical preparations. The invention is useful in the water industry for maintaining the quality of drinking water in distribution systems without the use of chlorine, in agriculture for watering to improve plant vitality and increase agricultural production.

### List of reference numbers

- 1: antenna
- 2: radio-frequency generator
- 3: magnetic component
- 4: input chamber
- 5: confusor
- 6: nozzle chamber
- 7: diffuser
- 8: output chamber
- 9: cavitator
- 10: cavitation cloud
- 11: injection tube
- 12: gas cloud

## Claims

1. A cavitation tube for liquid activation containing interconnected components: a input chamber (4), a confuser (5), a nozzle chamber (6), a diffuser (7) and a output chamber (8), **characterized in that** it comprises at least one antenna (1) connected to the radio-frequency generator (2) of electromagnetic waves located in the input chamber (4) or in the output chamber (8), wherein this at least one antenna (1) is arranged in electrically non-conductive, transparent for electromagnetic waves and in indirect contact with the liquid, wherein the nozzle chamber (6) has the smaller effective cross-sectional area than both the input chamber (4) and the output chamber (8), and wherein the frequency of the electromagnetic waves of the radio-frequency generator (2) is from the range 50 MHz to 3 GHz.

2. The cavitation tube for liquid activation according to claim 1, **characterized in that** the radio-frequency generator (2) is adapted to generate electromagnetic pulses.

3. The cavitation tube for liquid activation according to any one of the preceding claims, **characterized in that** it comprises at least one magnetic member (3) arranged in an area of the nozzle chamber (6).

4. The cavitation tube for liquid activation according to any of the preceding claims, **characterized in that** it comprises at least one cavitator (9).

5. The cavitation tube for liquid activation according to claim 4, **characterized in that** the cavitator (9) is located in the nozzle chamber (6).

6. The cavitation tube for liquid activation according to claim 4, **characterized in that** the cavitator (9) is located outside the nozzle chamber (6).

7. The cavitation tube for liquid activation according to any one of the preceding claims, **characterized in that** the antenna (1) is located in the input chamber (4) and extends at least into the confuser (5).

8. The cavitation tube for liquid activation according to any one of claims 1 to 6, **characterized in that** the antenna (1) is located in the output chamber (8) and extends at least into the diffuser (7).

9. The cavitation tube for liquid activation according to any one of the preceding claims, **characterized in that** the at least one antenna (1) has a deflection from the longitudinal direction of the axis of the liquid flow.

10. The cavitation tube for liquid activation according to any one of the preceding claims, **characterized in that** the plurality of antennas (1) are disposed in the input chamber (4) or in the output chamber (8).

11. The cavitation tube for liquid activation according to any one of the preceding claims, **characterized in that** it comprises a gas supply injection tube (11) at the input of the diffuser (7).

12. A method for liquid activation, **characterized in that** it is performed in at least one cavitation tube according to any one of the preceding claims, by means of magnetic resonance in the flowing liquid, when electromagnetic wave energy having the frequency range of 50 MHz to 3 GHz is applied to the flowing liquid in the cavitation tube to produce naturally occurring cavitation in the diffuser (7), supplied by at least one antenna (1) immersed in the liquid and fed from the radio frequency electromagnetic wave generator (2).

13. The method for liquid activation according to claim 12, **characterized in that,** in addition to the cavitation naturally occurring in the diffuser (7) by the flowing liquid, the cavitation effect achieved by inserting at least one cavitator (9) into the cavitation tube is also applied.

14. The method for liquid activation according to any one of claims 12 to 13, **characterized in that,** in addition to the cavitation naturally occurring in the diffuser (7) by the flowing liquid, the cavitation effect achieved by feeding the gas through at least one injection tube (11) into the area of the nozzle chamber (6) up to the input of the diffuser (7) is also applied.

15. The method for liquid activation according to claim 14, **characterized in that** the gas fed through the at least one injection tube (11) into the area of the nozzle chamber (6) up to the diffuser inlet (7) is oxygen.

16. The method for liquid activation according to any one of claims 12 to 15, **characterized in that,** in addition to the magnetic resonance of the flowing liquid, the activation effect of the liquid is applied, achieved by generation of the magnetic field generated in the area of the nozzle chamber (6) by at least one magnetic component (3).

17. A device for liquid activation, **characterized in that** it comprises the plurality of cavitation tubes arranged in series according to any one of claims 1 to 11, such that the output chamber (8) of the preceding cavitation tube is followed by the output chamber (4) of the following one of the following cavitation tubes.

18. The device for liquid activation according to claim 17, **characterized in that** it comprises three cavitation tubes arranged in series.
